# EUROPEAN PATENT APPLICATION

(11) **EP 2 838 033 A1**
(43) Date of publication of application: **18.02.2015**
(21) Application number: 13306153.1
(22) Date of filing: 15.08.2013
(51) Int. Cl.: G06F 17/30

(54) **Method and apparatus for interactive review of a dataset**

(71) Applicant: Thomson Licensing, 92130 Issy-les-Moulineaux (FR)
(72) Inventor: Theis, Oliver, 32689 Kalletal (DE); Koehler, Ralf, 30455 Hannover (DE)
(74) Representative: Schmidt-Uhlig, Thomas

(57) **Abstract**

A method for interactive review of a dataset and an apparatus (20) configured to enable interactive review of a dataset are described. A user request to review the dataset is received (10) via user input (22). Responsive to this request, a processor (23) generates (11, 12) representative values from the dataset for a coarse view (2) of the dataset and for a fine view (3) of the dataset. A user interface generator (24) then outputs a graphic user interface (1) displaying (13) the coarse view (2) of the dataset and the fine view (3) of the dataset.

## Description

### FIELD OF THE INVENTION

The invention relates to a method and to an apparatus for interactive review of a dataset. More specifically, a method and an apparatus are described, which allow a reviewer to easily access and analyze data of a large dataset using a graphic user interface.

### BACKGROUND OF THE INVENTION

Digital motion pictures, also referred to as a digital image sequence, often come along with metadata information. Preferably, metadata information is available for every single frame of the digital image sequence. Metadata is typically generated either by the camera itself or, more likely, by a real-time or non-real-time post processing algorithm. Metadata comprises a plurality of information, e.g. the noise level, image contrast or, in case of more sophisticated algorithms, a number of faces or cars or the like detected within the respective frame. However, for a 90 minutes digital movie with typically 24 frames per second a single metadata file comprises 129600 metadata elements. In professional post production environments, a human reviewer working on multiple datasets per movie or even with multiple movies having a plurality of datasets needs to inspect the metadata information for certain quality criteria. Due to the huge amount of information the human reviewer has a vital interest in optimizing the time needed to inspect the metadata.

Common techniques for displaying such large amount of data in a single plot, e.g. in a graph or bar plot, typically use downsampling in order to match the amount of data that is desired to be displayed (e.g. the more than 100000 metadata elements) to the available pixels or dots of a display unit. A display unit within the meaning of the term is e.g. a monitor especially used for display of the metadata, a graphical user interface (typically referred to as a GUI), e.g. a window that is used for that purpose. The available resolution is defined by the monitor itself, i.e. by the hardware resolution of the respective monitor or by a number of pixels inside a GUI-window that is used for display of the metadata.

In this regard EP 2 485 190 discloses a solution for representing a large amount of metadata corresponding to sequences of image frames on a displaying media with finite resolution. In order to ensure that a generated data graph fits the displaying media, the dataset is divided into clusters of a defined length. Each cluster represents a single value of the plot and is processed individually. Processing of the clusters is performed in such way that outliners are maintained. This is well suited for giving a quick overview of the metadata for quality control. However, while this approach ensures that important data samples are visible to the reviewer, how to allow the reviewer to handle such important data samples is not discussed.

### SUMMARY OF THE INVENTION

It is an object of the invention to provide an improved solution for interactive review of a large dataset using a graphic user interface.

According to one aspect of the invention, a method for interactive review of a dataset comprises the steps of:
- receiving a user request to review the dataset;
- generating representative values from the dataset for a coarse view of the dataset;
- generating representative values from the dataset for a fine view of the dataset; and
- displaying the coarse view of the dataset and the fine view of the dataset in a graphic user interface.

Accordingly, an apparatus configured to enable interactive review of a dataset comprises:
- a user input configured to receive a user request to review the dataset;
- a processor configured to generate representative values from the dataset for a coarse view of the dataset and for a fine view of the dataset; and
- a user interface generator configured to output a graphic user interface displaying the coarse view of the dataset and the fine view of the dataset.

Similarly, a computer readable storage medium has stored therein instructions enabling interactive review of a dataset, which when executed by a computer, cause the computer to:
- receive a user request to review the dataset;
- generate representative values from the dataset for a coarse view of the dataset;
- generate representative values from the dataset for a fine view of the dataset; and
- output a graphic user interface displaying the coarse view of the dataset and the fine view of the dataset.

One aspect of the present invention is to simultaneously provide a representation of the dataset, e.g. metadata associated to a video sequence, in a coarse and a fine scale plot. In this way, in addition to the quick overview of the dataset also a direct graphical representation of a subset of the dataset without restrictions caused by the media resolution is available for a detailed inspection.

Preferably content from which the dataset is derived, e.g. a single frame of the video sequence, is displayed together with the displayed coarse view and fine view, e.g. for interactive data review and processing purposes. In this way the proposed approach combines visualization of a dataset on different temporal scales and display of the underlying content for interactive review. The representation of the dataset preferably serves as a timeline for interactive jumping to, selecting of and fast preview of content. This easily allows further inspection and handling of anomalies that have been discovered on the coarse scale.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

### BRIEF DESCRIPTION OF THE DRAWINGS

- Fig. 1: depicts a graphic user interface suitable for interactive review of a dataset;
- Fig. 2: illustrates a method according to the invention for interactive review of a dataset; and
- Fig. 3: depicts an apparatus implementing the method of Fig. 2.

### DETAILED DESCRIPTION OF A PREFERRED EMBODIMENT

In the following the invention shall be described at the example of interactive review of metadata corresponding to an image sequence comprising frames. It is assumed that metadata varies frame by frame. Of course, use of the invention is not limited to this example. The general approach is likewise applicable to other types of datasets.

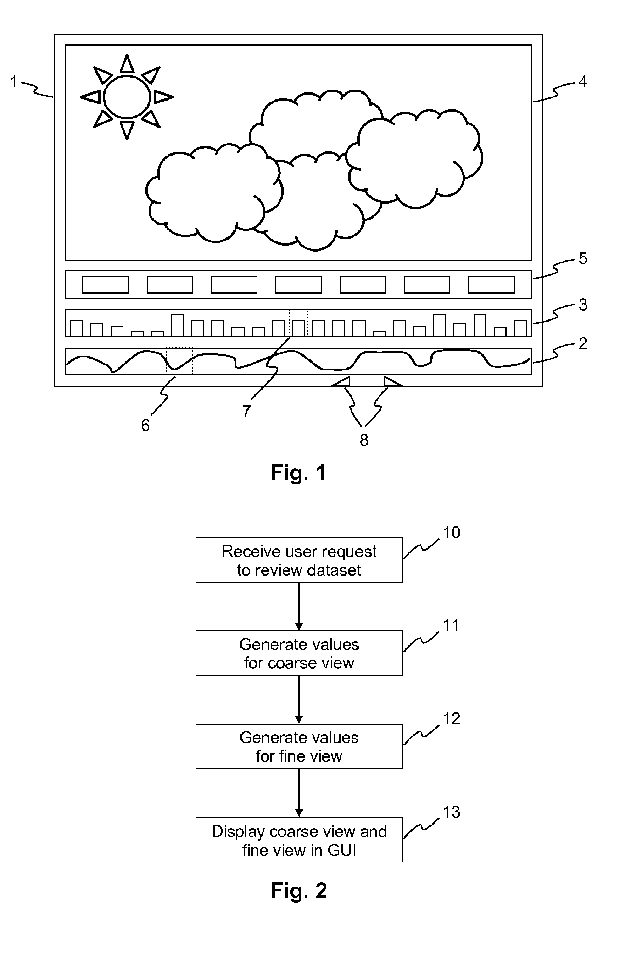

Fig. 1 is a schematic exemplary view of a graphic user interface 1 used for interactive review of the set of metadata. At the bottom of the screen layout, metadata for the complete image sequence is presented in a coarse view 2, where horizontal pixels represent information for multiple frames. The coarse view 2 is preferably generated by determining a value for the maximum number of values that can be displayed in the coarse view 2, generating a corresponding number of data clusters, determining a representative value for each cluster, and displaying only the determined representative values in the coarse view 2. Each cluster comprises a plurality of subsequent metadata elements, which is determined by dividing the total number of metadata elements by number of values that can be displayed. The representative value for each cluster is determined by applying a predetermined function to the metadata elements of the respective cluster, e.g. a max-function or a min-function.

Above the coarse view 2 a fine view 3 representing a section of the set of metadata is shown, favorably with the metadata for each single frame. The section is advantageously highlighted in the coarse view 2 with a section window 6. The size of the section interval is preferably set in a way that metadata for each frame is represented by at least one horizontal pixel. Typically, for convenience a couple of pixels are used together with spacing between the graphical representation of the data. In addition to the displayed metadata, advantageously the content of the current frame associated to the metadata is displayed in a frame window 4. In the fine view 3 the metadata corresponding to the current frame under investigation is shown in the middle of the fine view 3, favorably identified by a marker 7 for easy inspection of the metadata corresponding to the frames before and after. As an option, index frames are additionally displayed in an index view 5 together with the metadata figures.

Interactive behavior is achieved by clicking in the coarse view 2 or the fine view 3, e.g. by touching or pointing, and jumping to the corresponding frame. To this end a processing device with a keyboard, a mouse or a touch user interface is used to generate the dynamic display, e.g. a general purpose PC or dedicated hardware. Upon jumping to the target frame, the section window 6 in the coarse view 2, the metadata displayed in the fine view 3 and the content view in the frame window 4 are refreshed.

The coarse view 2 favorably is also used as a multi-purpose timeline to set and visualize clip markers 8. This is especially useful when the visualization is accompanied by a processing engine, e.g. for video post-processing or restoration.

In a general-purpose graphical user environment application, windows may usually be resized dynamically by the user. When this is the case, the coarse view 2 is reprocessed as described above in order to adjust to the new virtual screen resolution. The fine view section window 3 is then adjusted accordingly, e.g. by changing the range of data that is displayed or by changing the number of pixels that are used for representing a data value of the space between adjacent data values.

A method for interactive review of a dataset is schematically illustrated in Fig. 2. In a first step a user request to review the dataset is received 10. This request is preferably either an explicit request, i.e. the user selects a 'Review'-button is a menu, or the request is implicit. For example, loading the dataset into a program may constitute the request. Responsive to the request representative values for a coarse view 2 of the dataset are generated 11 from the dataset. Likewise, representative values for a fine view 3 of the dataset are generated 12 from the dataset. Both the coarse view 2 of the dataset and the fine view 3 of the dataset are displayed 13 in a graphic user interface 1.

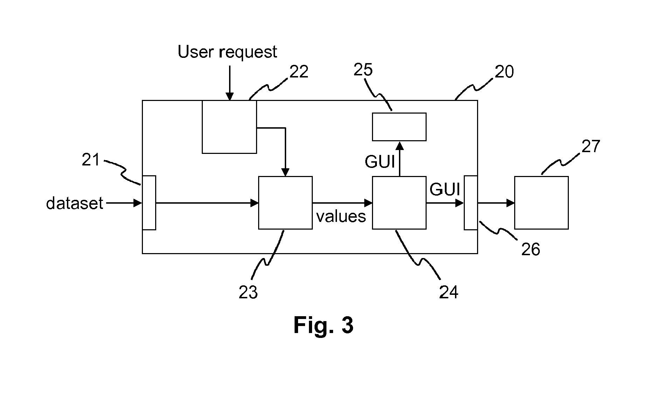

An apparatus 20 configured to implement the method of Fig. 2 is schematically shown in Fig. 3. The apparatus 20 has an input 21 for receiving a dataset, e.g. from a local storage or a network source, and a user input 22 configured to receive 10 a user request to review the dataset. Responsive to such a user request, a processor 23 generates 11, 12 representative values from the dataset for a coarse view 2 of the dataset and for a fine view 3 of the dataset. These values are provided to a user interface generator 24, which outputs a graphic user interface 1 displaying 13 the coarse view 2 of the dataset and the fine view 3 of the dataset. The graphic user interface 1 is either output to a display 25 forming part of the apparatus or to an external display 27 via a dedicated output 26. In either case, advantageously the display 25, 27 serves as a touch user interface for the apparatus 20. Of course, the various units of the apparatus 20 may likewise be combined or partially combined into a single unit or implemented as software running on a processor.

Although the invention has been described hereinabove with reference to a specific embodiment, it is not limited to this embodiment and no doubt further alternatives will occur to the skilled person that lie within the scope of the invention as claimed.

## Claims

1. A method for interactive review of a dataset, the method **comprising** the steps of:
- receiving (10) a user request to review the dataset;
- generating (11) representative values from the dataset for a coarse view (2) of the dataset;
- generating (12) representative values from the dataset for a fine view (3) of the dataset; and
- displaying (13) the coarse view (2) of the dataset and the fine view (3) of the dataset in a graphic user interface (1).

2. The method according to claim 1, **wherein** the representative values for the coarse view (2) of the dataset are generated (11) by clustering data elements of the dataset in accordance with a number of displayable values in the coarse view (2) and determining a value to be displayed for each cluster.

3. The method according to claim 1 or 2, **wherein** the representative values for the fine view (3) of the dataset are generated (12) by selecting a subset of the dataset, the subset of the dataset corresponding to a specified region (6) of the coarse view (2).

4. The method according to one of claims 1 to 3, **further** comprising the steps of:
- receiving a user input specifying a region (6) of the coarse view (2);
- generating (12) representative values from the dataset for the fine view (3) of the dataset in accordance with the region (6) specified by the user; and
- updating the fine view (3) of the dataset with the generated (12) representative values from the dataset.

5. The method according to one of claims 1 to 4, **further** comprising the steps of:
- receiving a user input to resize the graphic user interface (1);
- generating (11, 12) representative values from the dataset for the coarse view (2) of the dataset and for the fine view (3) of the dataset in accordance with a size of the resized graphic user interface (1); and
- updating the coarse view (2) of the dataset and the fine view (3) of the dataset with the generated (11, 12) representative values from the dataset.

6. An apparatus (20) configured to enable interactive review of a dataset, the apparatus **comprising:**
- a user input (22) configured to receive (10) a user request to review the dataset;
- a processor (23) configured to generate (11, 12) representative values from the dataset for a coarse view (2) of the dataset and for a fine view (3) of the dataset; and
- a user interface generator (24) configured to output a graphic user interface (1) displaying (13) the coarse view (2) of the dataset and the fine view (3) of the dataset.

7. A computer readable storage medium having stored therein instructions enabling interactive review of a dataset, which when executed by a computer, cause the computer to:
- receive (10) a user request to review the dataset;
- generate (11) representative values from the dataset for a coarse view (2) of the dataset;
- generate (12) representative values from the dataset for a fine view (3) of the dataset; and
- output a graphic user interface (1) displaying (13) the coarse view (2) of the dataset and the fine view (3) of the dataset.
